# DEMANDE DE BREVET EUROPEEN

(11) **EP 1 221 729 A1**
(43) Date de publication de la demande: **10.07.2002**
(21) Numéro de dépôt: 01403324.5
(22) Date de dépôt: 20.12.2001
(51) Int. Cl.: H01M 2/20

(54) **Système de raccordement électrique de generateurs electrochimiques**

(30) Priorité: 04.01.2001 FR 0100076
(71) Demandeur: ALCATEL, 75008 Paris (FR)
(72) Inventeur: Payen, Stéphane, 16290 Hersac (FR); Souliac, Laurent, 33110 Le Bouscat (FR)
(74) Mandataire: Laroche, Danièle

(57) **Abrégé**

Un élément électrochimique (1) présente deux pôles (2, 3) disposés sur des faces opposées; chaque pôle comporte un embout (4, 5) avec au moins une partie sensiblement plane en saillie (6, 7), chacune des parties est conformée pour se caler en translation avec une partie plane en saillie (6, 7) de l'autre pôle d'un autre élément électrochimique.

L'invention assure un assemblage simple et rapide d'éléments électrochimique; la position et la forme des embouts permettent le passage d'outils de soudure. L'impédance de l'assemblage est faible du fait de la forte section de passage du courant et de la nature de l'assemblage.

## Description

L'invention porte sur des éléments de générateurs électrochimiques de forte puissance (intensité de décharge élevée : I>50A), et plus particulièrement sur la liaison mécanique et électrique entre de tels éléments.

Il est courant de disposer plusieurs éléments électrochimiques en série pour cumuler les tensions des éléments. L'assemblage en bâton ou en batterie d'éléments de puissance, par le biais de filetages, est notamment connu. De tels éléments présentent une borne filetée mâle conductrice sur leur pôle positif et une borne filetée femelle disposée sur leur pole négatif ou inversement. La borne mâle d'un élément se visse dans la borne femelle d'un autre élément pour réaliser un assemblage. Ce type d'assemblage assure à la fois la connexion mécanique et électrique de deux éléments par filetage. Un traitement par dépôt de nickel permet de diminuer l'impédance de contact. De tels assemblages présentent cependant des inconvénients. Ils font appel à des pièces de décolletage, difficiles à usiner et à revêtir de nickel. Le revêtement de nickel est également gênant pour souder les bornes sur les pôles des éléments. De plus, les assemblages vissés sont peu fiables: ils sont sensibles aux vibrations, tant au montage que lors de leur utilisation. Par ailleurs, les impédances de contact sont élevées et varient selon la qualité du montage. Enfin, ce type d'assemblage est difficile à automatiser et limite les cadences de production de batteries.

Il est par ailleurs connu du document FR-A-2 335 962 une batterie comprenant au moins deux générateurs électrochimiques possédant chacun un bac métallique formant une borne d'une première polarité, et une borne de la polarité opposée faisant saillie par rapport à l'ouverture du bac, caractérisée en ce que ces deux générateurs sont liés électriquement et mécaniquement par une coupelle de connexion, emboîtée sur ledit bac de l'un d'eux, et soudée à ce bac par son bord et à la borne de la polarité opposée de l'autre générateur par son disque.

Il est également connu du document EP-A-0 717 453 un procédé d'assemblage d'une batterie constituée d'une pluralité d'éléments en série, dans le but d'améliorer les performances de charge/décharge ainsi que la productivité. Un pôle d'extrémité convexe formé sur le dessus d'un élément est tout d'abord soudé à une extrémité d'une borne conductrice et l'autre élément est placée au-dessus de l'élément relié à la borne conductrice de façon que les axes des deux éléments soient orientés dans une même direction, et dans cette configuration, le pôle d'extrémité plat formé sur la partie inférieure de l'autre élément et l'autre extrémité de la borne conductrice sont soudés indirectement.

Le document EP-0 235 976 montre des éléments cylindriques reliés entre eux au moyen de conducteurs flexibles qui sont d'abord disposés côte à côte afin d'être soudés ou brasés, puis pliés de manière à se placer dans l'espace séparant les deux éléments. Ces conducteurs sont de faible épaisseur pour présenter la souplesse nécessaire au pliage. Leur section ne permet pas le passage de courants élevés. Ce procédé de raccordement ne peut donc pas être utilisé pour la réalisation de générateurs électrochimiques de forte puissance.

L'invention propose une solution à ces différents problèmes. Elle propose notamment un élément électrochimique permettant un raccordement électrique avec un autre élément en vue du passage de courants élevés qui soit rapide et fiable, avec une impédance de liaison réduite et un accès amélioré pour les outillages de soudure. Elle permet en outre un meilleur refroidissement d'une batterie formée de tels éléments.

Plus précisément, l'invention concerne un élément électrochimique présentant deux pôles disposés sur des faces opposées, au moins un des pôles comportant un embout conducteur présentant au moins une partie sensiblement plane en saillie par rapport audit pôle dans l'axe de l'élément, ledit embout étant conformé pour s'assembler par une translation avec un embout d'un autre élément électrochimique de manière à ce que lesdites parties planes saillantes de chacun desdits embouts viennent se caler plan sur plan.

Selon une variante, l'embout d'un pôle présente au moins deux parties perpendiculaires sensiblement planes.

Selon un mode de réalisation, les embouts sont formés de cornières.

Selon une variante, une cornière présente une section en forme de U.

Selon une autre variante, une cornière présente une section en forme de L.

Selon un mode de réalisation particulier de l'invention, une partie plane en saillie d'un embout présente une ouverture conformée pour être traversée par une partie, notamment une partie plane, d'un embout de l'autre pôle d'un autre élément électrochimique.

Selon une variante, les deux embouts présentent des faces de calage coplanaires.

L'invention concerne également un ensemble comprenant un premier élément électrochimique et un deuxième élément électrochimique, chacun desdits éléments comportant au moins un embout selon l'une des revendications précédentes. De préférence le deuxième élément comporte un embout identique à l'un des embouts du premier élément.

Avantageusement, un espace d'accès aux parties planes en saillie est ménagé entre les éléments électrochimiques, lorsque les embouts sont assemblés. De préférence la longueur de la partie plane en saillie est suffisante pour permettre le passage de l'outillage d'assemblage par soudure ou brasure.

L'invention concerne par ailleurs un procédé d'assemblage de deux éléments électrochimiques selon l'invention, comprenant les étapes consistant à caler plan sur plan, en translation, des parties planes en saillie de deux embouts des deux éléments et à solidariser les deux embouts.

Selon une forme d'exécution, l'étape de solidarisation des deux embouts comprend une phase de soudure des embouts sur leurs flancs. Un moyen de soudage est introduite dans l'espace séparant les éléments dans une direction transversale par rapport à l'axe de l'élément et aux parties planes en saillie.

D'autres caractéristiques et avantages de l'invention apparaîtront à la lecture de la description qui suit du mode de réalisation de l'invention donnée à titre d'exemple et en référence aux dessins qui montrent :
- figure 1, une vue de côté d'un élément électrochimique selon un premier mode de réalisation de l'invention;
- figure 2, une vue de côté d'un assemblage d'éléments de la figure 1;
- figure 3, une vue de côté d'un élément électrochimique selon un deuxième mode de réalisation de l'invention;
- figure 4, une vue de face de l'élément électrochimique de la figure 3;
- figure 5, une vue de côté d'un assemblage d'éléments de la figure 2.

L'invention propose un élément comportant au moins un embout sur l'un des pôles, cet embout pouvant se caler sur et s'assembler avec un embout d'un autre élément par une translation.

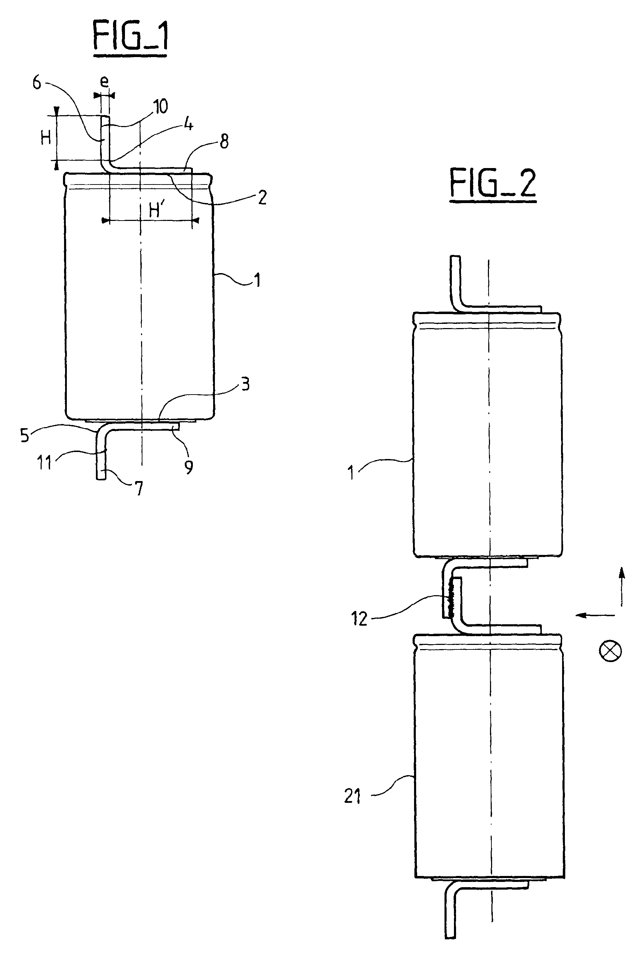

La figure 1 montre un premier mode de réalisation d'un élément électrochimique selon l'invention. Dans ce mode de réalisation, chaque pôle présente un embout permettant le calage plan sur plan et l'assemblage en translation de deux éléments à assembler par leurs embouts conformés. L'élément 1 a un corps de forme cylindrique et présente un pôle 2 à une extrémité du corps et un pôle 3 à l'autre extrémité. Sur les pôles 2 et 3 sont soudés respectivement des embouts 4 et 5. Chaque embout 4 ou 5 présente deux parties sensiblement planes qui font saillie dans l'axe de l'élément par rapport aux pôles 2 et 3.

Chaque embout 4 ou 5 est une pièce conductrice conformée pour se positionner ou se caler plan sur plan et s'assembler avec un embout d'un autre élément par une translation. Dans l'exemple de la figure, les embouts 4 et 5 sont réalisés sous forme de cornières présentant une section par un plan comprenant l'axe de l'élément en forme de L, présentant ainsi deux parties planes perpendiculaires 6 et 8, et 7 et 9 respectivement. L'embout 4 présente une partie plane saillante 6 et une partie plane 8 qui lui est perpendiculaire. De façon similaire, l'embout 5 présente une partie plane saillante 7 et une partie plane 9 qui lui est perpendiculaire. Les parties planes 6 et 7 sont saillantes par rapport à un pôle dans l'axe de l'élément. Les parties planes 8 et 9 sont en contact respectivement avec les bornes 2 et 3.

Les parties planes saillantes 6 et 7 présentent des faces de contact et de calage 10 et 11.Les embouts 4 et 5 présentent des dimensions identiques pour simplifier la compréhension mais il est également possible d'utiliser des embouts de géométries différentes. La partie plane 6 présente une hauteur H, une profondeur P et une épaisseur e. Pour simplifier, on décrira par la suite une partie plane 8 de mêmes profondeurs et épaisseurs que la partie plane 6, et de longueur H'. La longueur H' dépend des dimensions du pôle sur lequel un embout est assemblé.

Chaque embout 4 ou 5 est relié électriquement et mécaniquement à un pôle au moyen des parties planes 8 et 9 respectivement. Cette liaison peut être réalisée par soudure par exemple.

La figure 2 présente un assemblage d'éléments 1 et 21, tels que décrits ci-dessus. Les flèches représentent les différentes translations relatives possibles pour assembler l'embout 5 de l'élément 1 avec l'embout 4 de l'élément 21. On peut par de telles translations recouvrir la face 10 de l'embout 4 avec la face 11 de l'embout 5. Les embouts 4 et 5 se calent ainsi plan sur plan avant d'être assemblés. On peut ainsi procéder au calage plan sur plan de deux embouts de deux éléments à assembler, par une simple translation. Un tel calage permet de brider trois degrés de liberté en rotation et deux degrés de liberté en translation

L'embout 4 s'assemble à l'embout 5 par exemple par des soudures 12 sur les flancs des parties planes 6 et 7 des embouts, par des soudures au laser ou par rivetage. La longueur H de la partie plane 6 est suffisante pour permettre le passage de l'outillage d'assemblage. Une fois que les embouts 4 et 5 sont calés, on dispose ainsi d'un espace intermédiaire d'au moins une hauteur H entre les éléments à assembler pour le passage d'outils. Par exemple, pour la soudure, cet espace permet de rapprocher deux électrodes de soudure pour enserrer les parties planes 6 et 7. L'espace ménagé permet d'utiliser des électrodes de grandes dimensions pour appliquer un effort élevé pour le serrage des parties planes. En effet l'application d'un effort de serrage permet d'améliorer la qualité de la soudure et de diminuer l'impédance au niveau de l'assemblage. L'accès des électrodes étant transversal par rapport aux axes des éléments, il est également possible de serrer les parties planes 6 et 7 l'une contre l'autre sans appliquer d'effort sur le corps de chaque élément. On peut ainsi appliquer des efforts de serrage élevés sans détériorer les éléments. Dans le cas d'une soudure au laser, l'espace ménagé entre les éléments permet le passage du faisceau pour la soudure. Cet espace permet un meilleur refroidissement des éléments de la batterie formée, lors du fonctionnement, grâce à une circulation d'air améliorée.

La face 10 est parallèle à la face 11. Ces faces sont de plus parallèles à l'axe de leur élément. Ainsi, en assemblant deux éléments similaires tels que les éléments 1 et 21 comportant des embouts conformés pour s'assembler en translation, on obtient aisément un assemblage dans lequel les axes des éléments sont colinéaires.

De plus, dans ce mode de réalisation, la partie plane 6 est décalée par rapport à la partie plane 7. Ce décalage est tel que les axes de deux éléments assemblés s'alignent. Il suffit pour cela que les faces de contact 10 et 11 d'un élément soient coplanaires. Ce décalage permet également de distinguer les pôles d'un élément. On évite ainsi l'assemblage par inadvertance de deux éléments par leurs pôles de même polarité.

Selon une variante de l'invention, les embouts sont des pièces conductrices, dont les faces 10 et 1 1 sont revêtues de nickel pour améliorer la tenue à la corrosion.

L'épaisseur e de matériau conducteur des embouts est fonction de la section des embouts et de l'amplitude de courant souhaitée. On choisit ainsi de préférence une épaisseur supérieure à 1,5mm.

Pour un élément de hauteur 70mm et de diamètre 40mm, on peut notamment utiliser des embouts ayant les dimensions suivantes: P = 18mm, H=20mm, et e = 2.5mm.

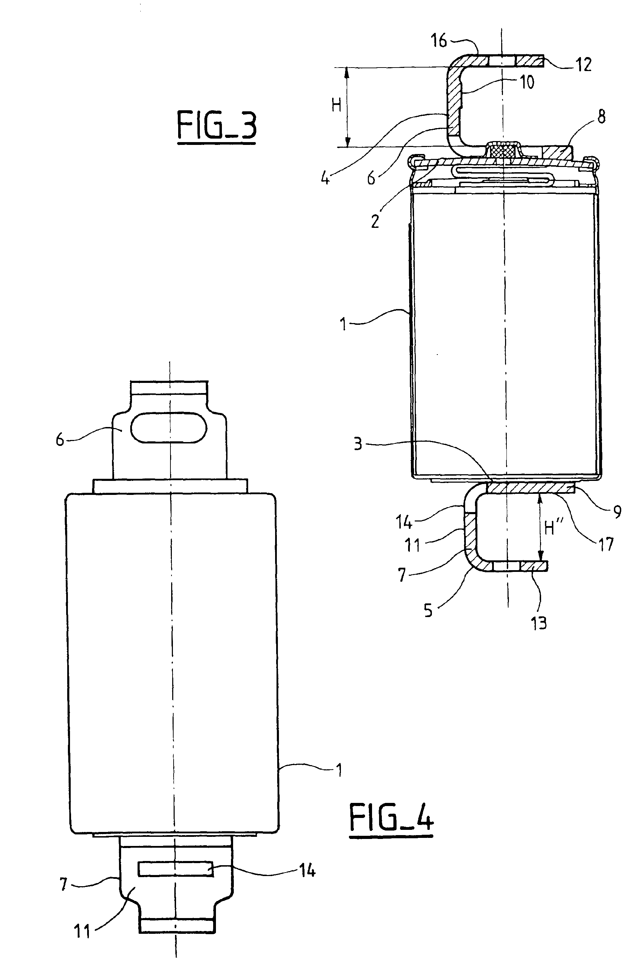

Les figures 3 et 4 montrent un deuxième mode de réalisation d'un élément électrochimique selon l'invention. Dans ce mode de réalisation les éléments ainsi créés disposent de faces planes perpendiculaires à l'axe de l'élément permettant ainsi un raccordement direct entre les éléments. L'élément 1 présente un corps similaire au mode de réalisation précédent. Sur les pôles 2 et 3 sont disposés respectivement des embouts 4 et 5, faisant saillie dans l'axe de l'élément par rapport aux pôles.

Dans l'exemple de la figure, les embouts 4 et 5 sont réalisés sous forme de cornières présentant une section par un plan comprenant l'axe de l'élément en forme de U. Chaque embout 4 ou 5 présente trois parties sensiblement planes 6, 8 et 12, et 7, 9 et 13 respectivement. L'embout 4 présente une partie plane 8 qui forme une première branche d'un U. La partie plane 6 forme le fond du U et relie la partie plane 8 à une partie plane 12 qui forme la deuxième branche du U. De façon similaire, l'embout 5 présente une partie plane 9 qui forme une première branche d'un U. Une partie plane 7 forme le fond du U et relie la partie plane 9 à une partie plane 13 qui forme la deuxième branche du U. Les parties 8 et 12 sont espacées d'un intervalle H. Cet espace correspond à la hauteur de la partie plane 6. Les parties 9 et 13 sont espacées d'un intervalle H". Cet espace correspond à la hauteur de la partie plane 7. L'intervalle H" est de préférence inférieur à l'intervalle H, pour permettre un calage aisé des embouts. L'embout 5 présente une ouverture 14 au niveau de la jonction entre les parties 7 et 9. Les parties 9 et 12 présentent respectivement des faces 17 et 16 venant en contact lors du calage et de l'assemblage de deux éléments. Pour simplifier, les parties planes des embouts 4 et 5 ont une même épaisseur e dans l'exemple représenté aux figures 3 et 4.

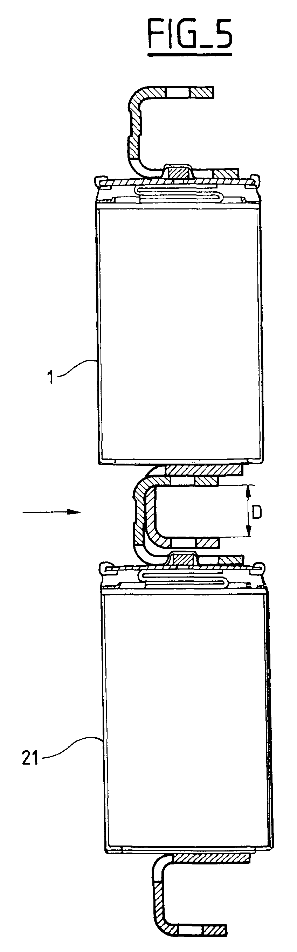

La figure 5 présente un assemblage d'éléments 1 et 21, tels que décrits ci-dessus. La flèche représente la translation relative pour assembler l'embout 5 de l'élément 1 avec l'embout 4 de l'élément 21. Lors de cette translation, la partie 12 de l'embout 4 traverse l'ouverture 14 de l'embout 5. La partie plane 12 est bridée en translation dans l'axe des éléments, à la fois par la partie 9 et par la partie 7, lorsqu'elle traverse l'ouverture 14. Les embouts 4 et 5 sont ainsi calés plans sur plans avant d'être assemblés. Les mouvements relatifs des deux éléments sont dès lors limités. On peut ainsi procéder au calage réciproque de deux embouts de deux éléments à assembler, par une simple translation.

On peut assembler les éléments du deuxième mode de réalisation par divers procédés tels que ceux décrits pour le mode de réalisation précédent. Une fois que les embouts 4 et 5 sont calés, on dispose également d'un espace intermédiaire entre les parties 12 et 13. La hauteur de cet espace vaut D = ( H" - e ). Cet espace permet comme dans le premier mode de réalisation le passage de l'outillage pour l'assemblage des éléments.

L'invention concerne également un ensemble comprenant un premier élément électrochimique et un deuxième élément électrochimique, chaque élément comprenant au moins un embout. De préférence l'embout du deuxième élément est identique à l'embouts du premier élément, mais il est également possible d'utiliser des embouts de géométries différentes. Le deuxième élément n'est pas nécessairement identique au premier élément. Ainsi, il est avantageux d'utiliser un deuxième élément ne présentant qu'un embout pour le placer à une extrémité d'un assemblage en bâton. Il est alors possible de le relier à des composants extérieurs adéquats.

L'invention concerne enfin un procédé d'assemblage de deux éléments. Le procédé comprend une étape de positionnement d'un premier élément avec un embout tel que décrit précédemment. On rapproche ensuite un deuxième élément comportant un embout, par exemple identique à un embout du premier élément. On cale ensuite plan sur plan, en translation, des parties planes en saillie de deux embouts des deux éléments. On solidarise ensuite les deux embouts par des moyens de fixation.

Les présents modes de réalisation et exemples doivent être considérés comme ayant été présenté à titre illustratif et non restrictif et l'invention n'est pas censée être limitée aux détails fournis ici mais peut être modifiée en restant dans le cadre de la portée des revendications annexées. Il est notamment possible de prévoir un élément comportant un premier embout présentant deux parties planes et un deuxième embout présentant trois parties planes. La forme du corps de l'élément est cylindrique dans les modes de réalisation décrits mais pourrait également prendre une autre forme, telle que parallélépipédique.

## Revendications

1. Elément électrochimique (1) présentant deux pôles (2, 3) disposés sur des faces opposées, au moins un des pôles comportant un embout conducteur (4, 5) présentant au moins une partie sensiblement plane (6, 7) en saillie par rapport audit pôle (2, 3) dans l'axe de l'élément, ledit embout (4, 5) étant conformé pour s'assembler par une translation avec un embout d'un autre élément électrochimique (4) de manière à ce que lesdites parties planes saillantes de chacun desdits embouts viennent se caler plan sur plan.

2. Elément électrochimique selon la revendication 1, dans lequel ledit embout présente au moins deux parties perpendiculaires sensiblement planes.

3. Elément électrochimique selon l'une des revendications précédentes, dans lequel les embouts sont formés de cornières.

4. Elément selon la revendication 3, **caractérisé en ce que** ladite cornière présente une section en forme de U.

5. Elément selon la revendication 3, dans lequel ladite cornière présente une section en forme de L.

6. Elément électrochimique selon l'une des revendications précédentes, dans lequel ladite partie plane en saillie présente une ouverture conformée pour être traversée par une partie d'un embout d'un autre élément électrochimique.

7. Elément selon l'une des revendications précédentes, **caractérisé en ce que** les deux embouts présentent des faces de calage coplanaires.

8. Ensemble comprenant un premier élément électrochimique et un deuxième élément électrochimique, chacun desdits éléments comportant au moins un embout selon l'une des revendications précédentes.

9. Ensemble selon la revendication 8, dans lequel ledit deuxième élément électrochimique comportant un embout identique à l'embout dudit premier élément.

10. Ensemble selon l'une des revendications 8 et 9, dans lequel un espace d'accès aux parties planes en saillie est ménagé entre les éléments électrochimiques, lorsque les embouts sont assemblés.

11. Ensemble selon la revendication 10, dans lequel la longueur de la partie plane en saillie est suffisante pour permettre le passage de l'outillage d'assemblage.

12. Ensemble selon l'une des revendications 8 à 11, dans lequel les axes desdits éléments sont colinéaires.

13. Procédé d'assemblage de deux éléments électrochimiques selon l'une des revendications 1 à 7, comprenant les étapes consistant :
- à caler plan sur plan, en translation, des parties planes en saillie de deux embouts des deux éléments ;
- à solidariser les deux embouts.

14. Procédé selon la revendication 10, dans lequel l'étape de solidarisation des deux embouts comprend une phase de soudure des embouts sur leurs flancs.
